Europäisches Patentamt

European Patent Office

Office européen des brevets

(19)

(11) **EP 1 414 868 B1**

(12) **EUROPEAN PATENT SPECIFICATION**

(45) Date of publication and mention
of the grant of the patent:
**22.12.2004 Bulletin 2004/52**

(51) Int Cl.⁷: **C08F 2/22**

(86) International application number:
**PCT/EP2002/008793**

(21) Application number: **02758438.2**

(22) Date of filing: **01.08.2002**

(87) International publication number:
**WO 2003/011914 (13.02.2003 Gazette 2003/07)**

(54) **PROCESS FOR OBTAINING AQUEOUS POLYMERIC DISPERSIONS**

Verfahren zur Herstellung von wässrigen Polymerdispersionen

PROCEDE RELATIF A L'ELABORATION DE DISPERSIONS POLYMERES AQUEUSES

(84) Designated Contracting States:
**AT BE BG CH CY CZ DE DK EE ES FI FR GB GR
IE IT LI LU MC NL PT SE SK TR**

(30) Priority: **02.08.2001 IT MI20011683**

(43) Date of publication of application:
**06.05.2004 Bulletin 2004/19**

(73) Proprietor: **Atofina**
**92800 Puteaux (FR)**

(72) Inventors:
• **BECCHI, Daniele**
**I-4210 Reggio Emilia (IT)**

• **FINOCCHIARO, Stefano**
**I-46019 Viadana (IT)**
• **LUGLI, Mario**
**I-42042 Fabbrico (IT)**
• **SAIJA, Leo**
**I-42011 Bagnolo In Piano (IT)**

(74) Representative: **Chaillot, Geneviève**
**Cabinet CHAILLOT,**
**B.P. No. 74**
**92703 Colombes Cédex (FR)**

(56) References cited:
**EP-A- 0 814 103         DE-A- 19 645 427
US-A- 3 637 563         US-A- 4 642 323**

**Description**

The present invention relates to a process for the production of aqueous polymer dispersions having a high dry content, reduced viscosity, very low microcoagula content and substantial absence of macrocoagula.

More specifically the present invention relates to a process for the preparation of aqueous polymer dispersions having:

- dry content higher than or equal to 65%;
- Brookfield viscosity lower than 1,000 mPa.s when the dry content is about 68% by weight, measured at 23°C under the following conditions: up to 400 mPa.s with type 2 spindle at 100 rpm, from 400 to 700 mPa.s with type 2 spindle at 20 rpm, from 700 to 3,000 mPa.s with type 3 spindle at 20 rpm;
- dry microcoagula content lower than 500 ppm; preferably lower than 200 ppm;
- wet macrocoagula content, with respect to the final dispersion weight, lower than 0.2% by weight.

Preferably the aqueous polymer dispersions are based on acrylic polymers having a Tg comprised between about -60°C and about +40°C.

As known, the aqueous polymer dispersions have the property to form polymer films after evaporation of the dispersant and for this reason they are widely used in various application fields, for example as binders for sealants, adhesives, varnishes, paints, coatings and cement-based mortars, compounds for the paper, textiles and leather treatment.

It is also known that for various applications, aqueous polymer dispersions having a high concentration of dry compound are required, since they show various advantages from the industrial point of view. For example they allow to reduce the transport and storage costs and require reduced times and energy.consumptions to remove the water during the application phases. Furthermore, in the application of the aqueous polymer.dispersions as binders for the sealant formulation, the use of dispersions having a high solid content allows to obtain compounds having high performances, with more controlled shrinkages.

A drawback of the aqueous polymer dispersions having a high dry content is that they generally have a high viscosity. This can negatively affect the production process of the aqueous polymer dispersion and significantly limit its application field. In fact, the polymerization of high viscosity compounds requires the use of suitable stirring systems to avoid the accumulation of the reaction heat and allow a good removal of the residual monomers.

It is known in the prior art that polymodal distributions of the polymer particle sizes confer to aqueous dispersions viscosities which, the dry content being equal, are much lower than those obtained with monomodal distributions.

Processes which allow to obtain aqueous polymer dispersions, having bimpdal or polymodal distribution of the average particle diameter are known in the prior art. Said processes, even allowing to obtain dispersions having a high dry content and relatively low viscosities, show various drawbacks.

In USP 6,028,135 a process to obtain an aqueous polymer dispersion wherein a preformed polymeric seed is used, is described. This technique is disadvantageous since the use of a seed implies an increase of the production costs. For example the dispersion with the polymeric seed must be produced and stored to carry out subsequent polymerizations.

In the patent application WO 98/07767 a process to prepare aqueous polymer dispersions having a high dry content with a Tg not higher than 0°C is described, wherein a polymeric seed is not used but a particular procedure of monomer feeding, in which the amount of possible inhibitors present in the reaction system is lower than 50 ppm; an amount equal to 1-10% of the monomer emulsion is fed from 15 to 60 minutes from the feeding start, the polymerization being carried out in the presence of the conventional surfactants and polymerization radical initiators. Optionally a basic change can be used (a solution which is transferred into the polymerization reactor before the reaction starting) formed by an aqueous solution which can contain a soluble salt. In the Examples of this patent aqueous polymer dispersions having a reduced viscosity are described. In particular, during the initial polymerization phase high ratios by weight salt/surfactant are used (higher than 100 during the first 5 minutes of polymerization). The Applicant has verified that by operating with said ratios salt/surfactant and using a polymerization process similar to that described in the Examples of said application, high viscosities or macrocoagula in an unacceptable amount are obtained (see the comparative Examples). Therefore the description of the patent application WO 98/07767 is effective only if the steps described in the Examples reported therein are exactly followed.

In USP 5,990,221 the preparation of polymer dispersions having a high dry content and low viscosity, by the use of miniemulsions of monomers in water, stabilized with the addition of at least a hydrophobic compound is described. The miniemulsion preparation takes place by using high pressure homogenizers, higher than at least 100 bar, or by using ultrasounds. Both these processes for preparing miniemulsions are not of common industrial application since they are expensive and require suitably specific plants.

In patent application WO 98/20048 a process for preparing multimodal polymer dispersions is described, carried out in at least two steps, wherein functional monomers are used, which can be of amidic, imidic, hydroxyalkylamidic nature, or hydroxyalkyl esters. The Examples show that in the first step, which can also consist of one or more steps, the feeding rate of the monomeric mixture is increased in the time. In the second step, wherein most of the monomer mixture is fed, the feeding rate is maintained constant. The comparative Examples of this patent show that if the monomeric mixture is not fed according to the indicated scheme, in the presence of the above monomers, there is the dispersion coagulation, or a multimodal polymer dispersion is not obtained. The process of WO 98/20048 results difficult, and from an industrial point of view, needs a severe control from the operators. Besides, the Examples reported in this patent application do not concern preparations of dispersions having a dry content higher than 60%.

The need was felt to have available a radical polymerization process in aqueous emulsion, allowing to obtain aqueous polymer dispersions having a high dry content and a very low viscosity, avoiding the addition of a polymeric seed, and simple to be carried out and easily applicable on an industrial scale in the conventional plants for emulsion polymerization.

The Applicant has surprisingly and unexpectedly found a radical polymerization process in aqueous emulsion which solves the above technical problem.

An object of the present invention is a process to obtain an aqueous polymer dispersion having a dry content from 65% to 75% by weight and the combination of the following properties:

- Brookfield viscosity lower than 1,000 mPa.s when the dry content is about 68% by weight, measured at 23°C under the following conditions: up to 400 mPa.s with type 2 spindle at 100 rpm, from 400 to 700 mPa.s with type 2 spindle at 20 rpm, from 700 to 3,000 mPa.s with type 3 spindle at 20 rpm;
- microcoagula content lower than 500 ppm, preferably lower than 200 ppm;
- wet macrocoagula content, with respect to the weight of the final dispersion, lower than 0.2% by weight,

wherein the diameter of the polymer particles has a multimodal distribution, said process carried out by radical polymerization in aqueous emulsion of unsaturated, preferably hydrogenated, monomers according to the following steps:

- formation of a monomer preemulsion in water by using surfactants;
- transfer into the polymerization reactor under stirring, in sequence, of the following aqueous phases:

    - basic charge formed by:

        a surfactant solution, in an amount by weight with respect to the weight of the final polymer dispersion; i. e. the dispersion added with all the components, from 1 to 15%;
        - a part of the preemulsion prepared in the previous phase, in an amount from 1% to 10% by weight with respect to the initial preemulsion;

- step C.1
  polymerization start, by adding radical initiators activatable thermally; chemically or by UV irradiation;
- step C.2
  monomeric mixture polymerization, by gradually adding into the reactor, separately, the initiator solution and the remaining part of the preemulsion;
  the polymerization temperature being generally from about 30°C to about 90°C;
- step C.3
  removal of the residual monomers;

wherein:

A) from the polymerization process start and up to a time in the range from -40% to +20% with respect to the instant, expressed in minutes, wherein the polydispersity index of the particle sizes of the polymer dispersion increases as below defined, the preemulsion is fed containing an amount of surfactant such to have a surfactant concentration in the reactor in this phase not higher than 0.7% by weight, the surfactant concentration preferably being from 0.3 to 0.6% by weight, and anyhow in a sufficient amount to maintain the preemulsion stable (such as to avoid the preemulsion unmixing);

B) subsequently to the time defined in A), and till the polymerization end, the remaining part of preemulsion is fed, preferably with a constant feeding rate, containing a surfactant amount such as to obtain at the polymerisation end a polymer dispersion wherein the surfactant concentration is higher than that of the surfactant in step A) but lower than 5% by weight with respect to the total weight of' the polymer dispersion, preferably from 0.7 to 3.5% by weight, more preferably from 1 to 2.5% by weight, the range extremities calculated with respect to the total weight of the polymer dispersion;

the particle sizes being measured by light scattering by the Coulter® Counter N4MD plus instrument, and the instant at which the polydispersity of the particle sizes increases, being the time at which the index increases up to a value at least of 0.05, preferably up to a value of 0.1, with respect to that, taken as about equal to zero, measured within 10 minutes starting from the polymerization start.

By polydispersity index (P.I.) it is meant the $2c/b^2$ ratio, wherein b and c are, respectively, the second and the third coefficient of the expansion in series of the autocorrelation function (ACF), subtracted of the basic line, determined by light scattering equipment, using an acquisition angle of 90°, as described more in detail in the analysis methods.

The P.I. value is a direct function of the variation coefficient of the particle diameter and consequently of the standard deviation of the average particle diameter of the polymer particles in the dispersion.

A test to determine when the variation of the polydispersity index takes place is the following: see Example 5, control test. A polymerization in emulsion is carried out following the process of the invention and feeding from the polymerization process start a preemulsion containing a surfactant amount such as to have a surfactant concentration in the reactor in this phase not higher than 0.7% by weight, the surfactant concentration preferably being from 0.3 to 0.6% by weight, and anyway in a sufficient amount to maintain the preemulsion stable. The time at which the polydispersity index increases is determined as above indicated. This test can for example be carried out so as to have a final concentration of dry compound of 65% by weight.

The surfactant solution used in the basic charge is formed by water containing a surfactant in an amount from 0.05 to 0.3% by weight.

The preemulsion in step C.2 is fed into the reactor with constant flow both in A) and in B). Or, determining the feeding rate as % by weight based on the total of the prepared preemulsion, preferably initially using a lower preemulsion feeding rate, about 0.08%/min-0.25%/min for example for the first 20-40 minutes counted from the polymerization beginning, and then a feeding rate higher of 0.25%/min, preferably 0.32%/min-0.80%/min is used, till the polymerization end, which takes place in times generally comprised between 4 and 6 hours.

The composition of the monomeric emulsion can remain constant during the whole polymerization, or it can be changed by subsequent increases, or in a continuous way, according to the required properties of the final compound. An example of the variation of the monomeric composition by subsequent increases is the synthesis of structured core-shell type polymers and the like, known in the prior art.

At the end of the process the residual monomers are removed using both chemical and chemico-physical methods. An example of a chemico-physical method is the stripping with vapour of the residual monomers. A chemical process to remove the monomers consists for example in feeding to the reactor a further aliquot of initiator and in continuing the heating at the above polymerization temperatures for a time ranging from 10 minutes to three hours. It is also possible to combine the two removal processes of the monomers.

The ethylenically unsaturated monomers used in the process according to the present invention are preferably esters of $C_3$-$C_{10}$ -$\alpha,\beta$-unsaturated, mono- or di-carboxylic aliphatic acids with $C_1$-$C_{12}$, preferably $C_1$-$C_8$ aliphatic, or $C_5$-$C_8$ cycloaliphatic alkanols, in admixture with $C_3$-$C_{10}$ -$\alpha,\beta$-unsaturated, mono- or di-carboxylic aliphatic acids, optionally in the presence of other ethylene monomers.

The $C_3$-$C_{10}$ -$\alpha,\beta$-unsaturated, mono- or di-carboxylic aliphatic acids composing the monomeric mixture and which can be used to obtain also the esters of the mixture itself, are for example acrylic, methacrylic, crotonic, maleic, fumaric and itaconic acids; preferably (meth)acrylic acid.

Examples of alkanols which can be reacted with the above mentioned acids to obtain the esters, are methanol,. ethanol, n-propanol, iso-propanol, 1-butanol, 2-butanol, ter-butanol, n-hexanol, 2-ethylhexanol. Examples of usable cycloalkanols are cyclopentanol and cyclohexanol.

Preferably in the process of the invention most of the monomeric emulsion, i.e. an amount higher than 70% by weight, is formed by the esters of $C_3$-$C_{10}$ -$\alpha,\beta$-unsaturated, mono- or di-carboxylic aliphatic acids with $C_1$-$C_{12}$ aliphatic alkanols or $C_5$-$C_8$ cycloaliphatic, optionally in the presence of a lower amount of $C_3$-$C_{10}$ -$\alpha,\beta$-unsaturated, mono- or di-carboxylic aliphatic organic acids.

Specific examples of these preferred esters are methyl-, ethyl-, n-butyl-, isobutyl- and 2-ethylhexyl-(meth) acrylate, di-octyl maleate and di-n-butylmaleate.

The ratio by weight between the acid and the ester ranges from about 1:10 to about 1:350.

The above described monomer classes usually form most of the monomeric mixture, in an amount of at least 70% by weight.

The other unsaturated ethylene monomers which can be used in the process of the present invention are for example the following: vinylaromatic monomers, such as styrene and derivatives thereof; $C_1$-$C_{12}$ alkyl vinylethers, such as methyl-, ethyl-, n-propyl-, isopropyl-, n-butyl-, isobutyl- and 2-ethylhexylvinyl ether; vinyl esters of $C_1$-$C_{18}$ aliphatic monocarboxylic acids, such as vinyl acetate, vinyl propionate, vinyl butyrate, vinyl valerate, vinyl hexanoate, vinyl 2-ethyl-hexanoate, vinyl decanoate, vinyl laurate and vinyl stearate.

Other unsaturated ethylene monomers modifiers of the polymer properties can also be added in the polymeric mixture, for example as regards the water absorption and the wetting capability with respect to the possible mineral fillers.

Non limitative examples of said monomers are the amides of the above mentioned $C_3$-$C_{10}$ mono- and di-carboxylic $\alpha,\beta$-unsaturated aliphatic acids, preferably (meth)acrylamide.

Monomers containing hydroxylic groups, for example hydroxy esters of the above $C_3$-$C_{10}$ mono- and di-carboxylic ($\alpha,\beta$-unsaturated acids with $C_2$-$C_{12}$ alkanediols, can be used. Examples of these monomers are hydroxyethyl (meth)acrylate, hydroxypropyl(meth)acrylate, hydroxybutyl(meth)acrylate.

Other monomers usable in the polymerization process according.to the present invention are nitriles of $C_3$-$C_{10}$ mono- and di-carboxylic ($\alpha,\beta$-unsaturated acids, such as (meth)acrylonitrile.

To the monomer mixture crosslinking monomers can be added with the purpose to modify the mechanical properties of the polymer, in an amount usually not higher than 3%, preferably from 0.1% to 1% by weight with respect to the monomeric formulation. Examples of said monomers are N-methylol-acrylamide, di(meth)acrylates and tri (meth) acrylates of $C_2$-$C_5$ alkylene glycols, in particular of ethylene and propylene glycols, vinylsiloxanes containing $C_1$-$C_8$ aliphatic alcohols, divinylbenzene, vinyl (meth) acrylate, allyl(meth)acrylate, diallyl maleate, diallylfumarate, triallylcyanurate.

The process of the invention is applicable in particular for the preparation of polymer dispersions obtained by polymerizing a monomer mixture comprising: one or more of the esters of the above (meth)acrylic acids, (meth) acrylic acids, hydroxyesters of the (meth) acrylic acid, a crosslinking agent, styrene.

Preferably, said dispersions are prepared by polymerizing the aforesaid monomers, in the following amounts:

- from 70 to 99.7% by weight of at least one ester of the (meth)acrylic acid with $C_1$-$C_{12}$ alkanols as above defined;
- from 0.3 to 5% by weight of (meth)acrylic acid;
- from 0 to 5% by weight of hydroxyesters of the (meth)acrylic acid with $C_1$-$C_{12}$ alkanols;
- from 0 to 2% of a monomer having crosslinking properties;
- from 0 to 15% by weight of styrene;
- from 0 to 15% by weight of vinyl acetate.

The surfactants used in the process of the invention can be non-ionic, and/or anionic or cationic or mixtures thereof; preferably mixtures of anionic and non-ionic surfactants are used.

Examples of surfactants are mono-, di- and trialkylphenols ethoxylated with ethoxy unit number (EO) comprised between 3 and 50 and $C_4$-$C_9$ alkyl chains; fat ethoxylated alcohols with EO unit number comprised between 3 and 50 and $C_8$-$C_{36}$ alkyl chains; ammonium salts of alkaline metals of $C_8$-$C_{12}$ alkyl sulphates; hemiesters of the sulphuric acid with $C_{12}$-$C_{18}$ ethoxylated alkanols with EO unit number between 4 and 50; $C_{12}$-$C_{18}$ alkylsulphonic acids or alkylarylsulphonic acids with 6 carbon atoms of the aromatic ring and $C_9$-$C_{18}$ alkyl chains.

Other examples of surfactants usable in the process of the invention are the ethers of the bis(phenylsulphonic) acid and its salts of ammonium and alkaline metals, containing a $C_4$-$C_{24}$ alkyl chain on one or both the aromatic rings. These compounds are known and are obtained as described for example in USP 4,269,749. They are available on the market with the trademark Dowfax® 2A1.

Optionally in the process of the invention protector colloids can also be used. Non limitative examples of protector colloids are polyvinyl alcohols, the cellulose derivatives and the vinylpyrrolidone copolymers.

The total amount of surfactants and optional protector colloids is lower than 5% as percentage by weight with respect to the final polymer dispersion obtained by the process of the invention, preferably it is from 0.7 to 3.5% by weight, more preferably from 1 to 2.5% by weight.

The polymerization is carried out, as said, in the presence of radical initiators activated by thermal way, UV irradiation or by chemical way. Non limitative examples of these systems are the peroxodisulphates of the alkaline and ammonium salts, azocompounds, redox couples optionally catalyzed by using metal cations having more than one oxidation state, as Fe or Co. Examples of these compounds are sodium and ammonium peroxodisulphates, azobisisobutyronitrile (AIBN), the couples formed by at least a peroxide or hydroperoxide (for example ter-butylhydroperoxide) and the sodium salt of the hydroxymethanesulphinic acid, or the hydrogen peroxide with ascorbic acid. Redox couples catalyzed by metal salts having more than one oxidation state are represented, for example, by the ascorbic acid/ferrous sulphate/hydrogen peroxide system, wherein the ascorbic acid can be substituted by one of the following compounds: sodic salt of the hydroxymethanesulphinic acid, sodium sulphite, sodium hydrogensulphite, sodium metabisulphite, sodium formaldehyde-sulphoxylate; the hydrogen peroxide can be substituted by ter-butylhydroperoxide and by alkaline metals or ammonium peroxodisulphates.

The used amount of radical initiators is preferably from 0.1 to 2% by weight with respect to the monomer mixture.

In the polymerization reaction chain transfer agent optionally can be added. The amount of these compounds is from 0.01 to 5% by weight with respect to the monomeric mixture. Mercaptanic compounds, such as mercaptoethanol, mercaptopropanol, mercaptobutanol, mercaptoacetic acid, mercaptopropionic acid, butylmercaptan, n-dodecylmercaptan can for example be mentioned. Said substances are preferably added in the polymerization in admixture with the monomers to be polymerized.

The process according to the present invention shows the following advantages: very good reproducibility, easy carrying out on industrial scale, use of limited amounts of surfactants, crust absence in the reactors and substantial absence of macrocoagula and microcoagula. It can be used to polymerize mixtures formed by monomers of even very different types and amounts. The process of the invention, as said, allows furthermore to obtain aqueous polymer dispersions substantially free from residual monomers.

The aqueous polymer dispersions obtainable by the process of the invention have a dry content from about 65 to about 75% by weight on the total weight of the dispersion, and having the viscosities lower than 3,000 mPa.s (ISO 2555, Brookfield RVT, 23°C, measured under the following conditions: up to 400 mPa.s with type 2 spindle at 100 rpm, from 400 to 700 mPa.s with type 2 spindle at 20 rpm, from 700 to 3,000 mPa.s with type 3 spindle at 20 rpm), preferably lower than 2,000 mPa.s, the amount of microcoagulum being preferably lower than 200 ppm and that of macrocoagulum lower than 0.2%.

Preferably said dispersions are obtainable by polymerizing the above monomeric mixture as preferred.

Said dispersions contain multimodal distributions of the dispersed polymer particle sizes wherein a fraction of particles having a non spherical shape is present, having an average diameter determined by electronic transmission microscopy, in the range 800-1,300 nm. Preferably the amount of said fraction is from 50 to 99% by weight with respect to the total of the polymer particles of the final dispersion; the particle part complement to 100 has sizes lower than 800 nm, preferably substantially lower than 500 nm.

Without to be bound to any theory, the Applicant thinks that the presence of said particles having an average diameter from 800 to 1,300 nm in the final polymer dispersion is responsible of the surprisingly low viscosity of the dispersions obtained according to the process of the invention.

With the process of the present invention it is possible to prepare aqueous polymer dispersions containing polymers having a Tg comprised between about -60°C and about +40°C.

The final polymeric dispersion obtainable according to the process of the invention is particularly suitable to be used as binder in the formulation of sealants, pressure-sensitive adhesives, water paints and water varnishes, coatings and cement-based mortars and/or cement elastic sheaths, compounds for the textiles, leather, paper, wadding and non woven fabric treatment.

The formulations obtainable starting from the polymer dispersions prepared by the process described in the present invention can optionally comprise other substances, such as for example coalescence agents, plasticizers, mineral and organic fillers, pigments, crosslinking agents, photosensitizers, antiscratch, antifoam agents, biocides, etc.

The following Examples illustrate the invention without limiting the scope thereof.

EXAMPLES

ANALYTICAL METHODS

Determination of the distribution of the sizes and of the morphology of the dispersed polymeric particles by electronic transmission microphotography.

The distribution of the sizes and of the morphology of the dispersed particles in the polymer dispersions containing a significant fraction having an average diameter higher than 800 nm has been determined by using the electronic transmission microphotography by a LEO 902 instrument, with an acceleration voltage of 80 KV, after having coloured the polymer particles by addition of an aqueous solution at 2% by weight of phosphotungstic acid. The particle diameter has been calculated as arithmetic mean between the minimum and maximum diameter of the particles represented in the microphotographies.

Determination of the polymerization instant at which the polydispersity of the polymer particle sizes of the dispersion increases

The determination of the polydispersity of the polymer particle sizes 'has been carried out by a light scattering Coulter Counter®N4MD Plus instrument connected to a personal computer IBM, using an acquisition angle of 90° and a total acquisition time of 200 seconds at 23°C. The polydispersity index (P.I.) is determined by the equation $P.I. = 2c/b^2$, wherein b and c are respectively the second and the third coefficient of the expansion in series of the natural logarithm of the autocorrelation function (ACF) substracted of the basic line:

$$\ln (G\ (_{\tau i}) - \text{basic line}) = a + b \cdot_{\tau i} + (1/2) \cdot c \cdot_{\tau i}{}^2$$

wherein the values of $\tau_i$ by i = 1, 2, 3, ...80 are the delay time values at which the ACF value is measured.

The P.I. value is a direct function of the variation coefficient of the particle diameter and consequently of the standard deviation of the average particle diameter of the polymer particles in the dispersion.

See the Instruction Handbook of the Coulter Counter®N4MD instrument ed. November 1995.

The software version associated to the instrument which has been used for the data processing is the 1.10.

The instant at which the polydispersity increases has been determined by carrying out a polymerization in the presence of a total amount of surfactant lower than 0.7%, and anyhow such as. to give rise to the phenomenon of the polydispersity increase, taking samples from the reaction mixtures having a volume of about 1 ml each, at intervals of 15 minutes the one from the other, starting from the beginning of the polymerization process.

The polydispersity at the beginning of the polymerization process results to be about equal to zero, representing a strictly monomodal distribution.

## Determination of the dry extract

The dry extract of the dispersions of the invention has been determined by drying the tested samples according to the EN 827 procedure. The samples have been dried at the temperature of 105°C for 60 minutes in a forced ventilation stove. The result is expressed as percentage of the non volatile compounds with respect to the sample original weight.

## Determination of the wet macrocoagulum.

The wet macrocoagulum present at the reaction end has been determined by filtering the polymer dispersion during the discharge phase from the reactor with a 36 mesh screen. The polymer collected in the screen has been then weighed after washing with deionized water and removal of the water excess by dripping and ligth pressing. The possible polymer blocks still remained inside the reactor are also weighed and therefore considered in the determination.

## Determination of the microcoagulum

The determination of the microcoagulum is carried out by filtering with a 120 mesh screen and subsequent washing with demineralized water and drying of the residue possibly retained by the screen in a forced ventilation stove for 15 minutes at 135°C. The amount is related to the weight of the discharged dispersion.

## Determination of the viscosity

The dispersion viscosity has been determined according to with the ISO 2555 method, by using a Brookfield viscosimeter (RVT model). The determinations have been carried out at the temperature of 23°C. The utilized spindle type and the rotation speed are indicated in the Examples.

## Determination of the glass transition temperature (Tg) of the dispersion polymers

The glass transition temperature has been determined by a Perkin Elmer DSC Pyris®1 instrument by using 40 $\mu$l pans and an operating cycle comprising the following steps:

1) maintenance of the sample for one minute at -90°C,
2) heating from -90°C to +20°C with a 20°C/min gradient,
3) cooling from +20°C to -90°C with a 40°C/min gradient,
4) repetition of steps 2) and 3).

## EXAMPLE 1

General procedure for preparing polymer dispersions

The procedure consists of the following steps:

A) Preparation of the solution basic charge

In a 12 litre reactor, equipped with a stirrer having rotating blades at angular speeds between 50 and 300 rpm, an amount of demineralized water in the range 900 g - 960 g depending on the dry content of the obtained polymer dispersion and 0.2 g of an aqueous solution at 45% of the Dowfax® 2A1 surfactant are introduced, see the description.
The solution is then heated under nitrogen atmosphere up to the temperature of 79-80°C.
The aqueous solution containing the surfactant, and optionally, as in the comparative Examples, a salt soluble in water, is called in the Examples basic charge.

B) Preparation of the preemulsion

In a 10 litre glass flask, equipped with a high speed stirrer, a preemulsion is prepared containing the monomers to be polymerized and an' amount of demineralized water comprised between 800 g and 1,000 g, depending on the required dry content. As stabilizers of the monomeric preemulsion the following surfactants are added:

-   Emulan® T02080 (mixture of ethoxylated fat alcohols with 20 EO units) in aqueous solution at 80% by weight.
-   Emulan® T04070 (mixture of ethoxylated fat alcohols with 40 EO units) in aqueous solution at 70% by weight.

C) Polymerization

C.1 Start phase

By means of an adjustable feeding pump, a part of the monomeric preemulsion (200 g) is transferred into the reactor wherein there is the basic charge heated at 79-80°C. The temperature inside the reactor is stabilized at 78-79°C and under stirring 22 g of an aqueous solution at 10% by weight of sodium peroxodisulphate (PDSNa) are quickly added to start the polymerization reaction.
The start process is followed until the peak temperature is reached, which generally is higher than 1-5°C the initial temperature of the emulsion. The peak temperature is reached after about 5-10 minutes from the addition of the radical initiator.

C.2 Polymerization

Separately an aqueous solution is prepared, containing from 65 to 90 g of an aqueous solution containing 45% by weight of the Dowfax® 2A1 surfactant, and from 60 g to 120 g of demineralized water, the water amount depending on the required dry content. This step has not been carried out in Example 5.
In the Examples according to the invention said aqueous solution is added to the monomeric emulsion at a time comprised between -40% and +20% with respect to the time at which the polydispersity variation as above defined is observed.
Example 5 discloses the determination of the polymerization instant at which the polydispersity increases. In the case of the Examples of the invention, this instant is of about 95 minutes from the feeding start.
In the Examples of the invention the addition of the Dowfax® 2A1 solution has been carried out at a time ranging from 60 to 100 minutes from the polymerization start.
In the comparative Examples the aqueous Dowfax® 2A1 solution is added with a procedure different from that of the invention.
The monomeric emulsion remained after the start phase is fed into the reactor starting one minute after the peak temperature has been reached and the aqueous solution of Dowfax® 2A1 is added thereto as indicated in the Examples:
The temperature at which the polymerization takes place is comprised between 80 and 84°C.
Contemporaneously a solution at 5% by weight of sodium peroxodisulphate is fed into the same reactor, by means of a pump, regulating the flux so that the feeding of the initiator solution continues for about 40 minutes after the addition of. the mixture containing the monomer preemulsion is over. The prolonged feeding of the peroxide solution has the purpose to reduce the concentration of the free monomers remained in the polymer dispersion.
In a first phase of the polymerization, in a time of 30 minutes, an amount of monomeric mixture equal to about 5% of the preemulsion is fed.
In a second phase, the remaining part of the monomeric mixture is fed with a feeding rate such as to maintain the polymerization temperature in the above range.
The ratio by weight initiator/monomers at the reaction end is equal to about 0.4%.
When the addition of the initiator solution is over, the dispersion in the reactor is maintained for about further 15 minutes at the reaction temperature.

C.3 Removal of the remaining monomers

The possible free monomers remaining after the above described phases of the polymerization process are removed by a redox treatment, by contemporaneously feeding into the reactor in a time of 60 minutes and at the temperature of 75-80°C, an amount equal to 30-35 g of an aqueous solution at 13% by weight of ter-butylhydroperoxide (TBHP), and in a time of 75 minutes an amount equal to 80-85 g of a solution at 4% by weight of sodium formaldehyde-sulphoxylate (SFS). Subsequently the temperature inside the reactor is maintained at 75-80°C for further 15 minutes.

The polymer dispersion is then cooled at room temperature, in case additioned with antifoam agents, regulators of the pH and/or biocides, and then discharged.

During the various phases of the polymerization process the reactor stirring speed is of 110-130 rpm for the dispersions obtained with the process according to the present invention and it is gradually increased up to about 200 rpm for the polymer dispersions having a higher viscosity, obtained by the processes described in the comparative Examples.

EXAMPLE 2 (comparative)

Polymerization according to the general procedure of Example 1 wherein the remaining part of surfactant is added with the preemulsion, immediately after the start

The surfactant initial aliquot, as from Example 1, has been added partly in the basic charge and partly in the preemulsion.

The used monomers were the following: butyl acrylate (BA), methacrylic acid (AMA), hydroxyethylmethacrylate (HEMA), styrene (S), in admixture with the crosslinking agent triethyleneglycol dimethacrylate TEGDMA.

The used amounts of monomers, and the composition of the monomeric mixture as per cent by weight, are shown in Table I.

The amounts of the 'various compounds which have been added to prepare the basic charge and the monomers preemulsion are shown in Table II.

The amounts of the basic charge, of the monomer preemulsion, of the other reactants and of water, which have been added during the polymerization, are shown in Tables III-A and III-B.

The final removal' of the monomers has been carried out by adding 30 g of the 13% TBHP solution and 80 g of the 4% SFS solution at the times respectively indicated in Example 1.

Table IV shows the properties of the obtained polymeric dispersion: the dry content, the Brookfield viscosity, determined with type 6 spindle at 20 rpm, the microcoagulum (ppm) and the polymer Tg in °C.

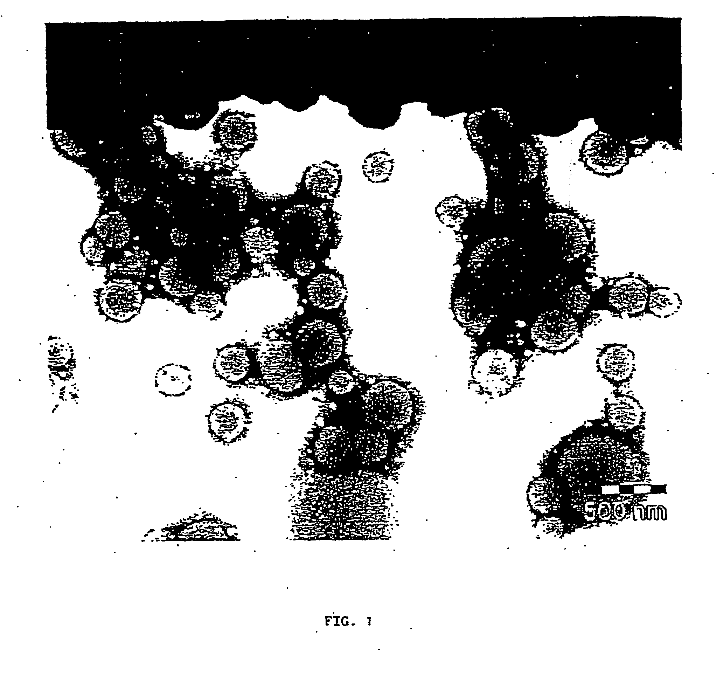

Fig. 1 shows the sizes and the shape of the polymer particles determined by electronic transmission microscopy (enlargement 36,000X), The sizes of said particles, which have a spherical shape, do not reach' the diameter of 800 nm.

EXAMPLE 3 (comparative)

Process wherein a salt soluble in water has been added in the basic charge

In the basic charge salt has been dissolved until a concentration 1% by weight.

The used monomers have been the following: BA, methyl methacrylate (MMA), AMA, HEMA, in admixture with.the crosslinking agent TEGDMA.

The used amounts of each monomer, and the composition of the monomeric mixture as per cent by weight are shown in Table I.

The amounts of the various compounds which have been added to prepare the basic charge and the preemulsion of the monomers are shown in Table II.

The amounts respectively of the basic charge, of the preemulsion, of the other reactants and of water, which have been added during the polymerization, are shown in Tables III-A and III-B.

The preemulsion coagulates at the polymerization start; therefore it was not possible to obtain a polymeric dispersion.

At the end of the polymerization the presence of two distinct phases has been observed: a cloudy aqueous surnatant and big polymer flocks on the reactor bottom.

EXAMPLE 4 (comparative)

Process according to the comparative Example 3 wherein the remaining part of the surfactant solution has been added from the polymerization beginning

A preemulsion has been prepared by using the same amounts of monomers, crosslinking agent and of the 'two solutions of Emulan® as described in the comparative Example 3. With respect to said Example, in the preemulsion preparation the amount of used demineralized water has been changed, 920 g instead of 800 g, and an amount of 90 g Dowfax® 2A1 45% solution has been added to the preemulsion.

Furthermore, the remaining part of the preemulsion has been fed into the reactor as such, and therefore the mixture formed by Dowfax 2A1 45% solution and demineralized water was not added to the preemulsion, as it was scheduled in Example 3.

The other solutions, process phases and respective times are as those of Example 3.

During the polymerization, to maintain the viscosity within acceptable limits and complete the polymerization process, it was necessary to add in the reactor further 480 g of demineralized water.

At the end of the polymerization the presence in the reactor of a big block of polymer material (macrocoagulum) has been observed.

The total amount was of about 140 g. The presence of said polymer macrocoagulum on the blade justifies the reduced amount of microcoagulum determined with the 120 mesh screen, by filtering the polymer emulsion.

The amounts of the various compounds which have been added to prepare the basic charge and the preemulsion of the monomers are shown in Table II.

The amounts respectively of the basic charge, of the preemulsion, of the other reactants and water, which have.been added during the polymerization phase, are shown in Tables III-A and III-B.

The final removal of the monomers has been carried out by adding 30 g of the TBHP 13% solution and 80 g of the SFS 4% solution at the times respectively indicated in Example 1.

Table IV shows the properties of the obtained polymer dispersion: the dry content, the' Brookfield viscosity, determined with type 5 spindle at 20 rpm, the microcoagulum (ppm) and the polymer Tg in °C.

EXAMPLE 5

Polymerization according to the invention: determination of the instant at which the polydispersity of the particle sizes increases in the presence of the surfactant initial amount

The used monomers have been the following: BA, MMA, AMA, HEMA, in admixture with the crosslinking agent TEGDMA.

The used amounts of monomers, and the composition of the monomeric mixture as per cent by weight, are shown in Table I.

The amounts of the various compounds which have been added to prepare the basic charge and the monomer preemulsion are shown in Table II.

The amounts respectively of the basic charge, of the preemulsion, of the other reactants and water, which have been added during the polymerization phase, are shown in Tables III-A and III-B.

From the end of the start phase and during the whole polymerization aliquots of about 1 ml of the dispersion have been taken (negligible volumes with respect to the total volume of the system), at intervals of 15 minutes the one from the other.

On said samples the determination of the polydispersity of the average diameter of the polymer particles has been carried out by the above described Coulter Counter instrument.

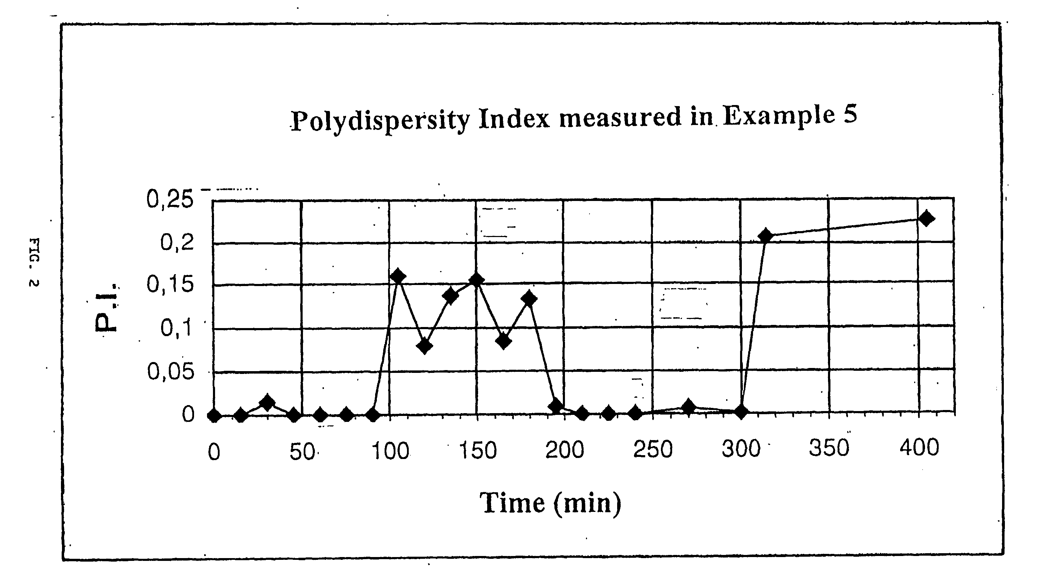

In the graph of Figure 2 said determinations and respective sampling times are shown, expressed in minutes from the beginning of the monomeric mixture feeding. A quick increase of the polydispersity is noticed at the time of about 95 minutes, which is the time one wants to measure and with respect thereto the total duration of the section A) of step C.3 is determined.

The final removal of the monomers has been carried out by adding 35 g of the TBHP 13% solution and 85 g of the SFS 4% solution at the times respectively indicated in Example 1.

Table IV shows the properties of the obtained polymer dispersion: the dry content, the Brookfield viscosity, determined with type 3 spindle at 20 rpm, the microcoagulum (ppm) and the polymer Tg in °C.

The polymerization is continued by feeding the remaining part of preemulsion having the same surfactant concentration of phase A. From the results it can be observed that the non addition of the surfactant remaining amount, equal to about 40 g, causes the formation of a high content in macrocoagula (about 1,500 g).

EXAMPLE 6

Polymerization process according to the invention wherein the second surfactant aliquot has been added in the preemulsifier 80 minutes after the feeding start

The used monomers and the respective amounts are the same as in Example 5. See Table I.

The amounts of the various compounds which have been added to prepare the basic charge and the monomer preemulsion are shown in Table II.

The amounts respectively of the basic charge, of the preemulsion, of the other reactants and water, which have been added during the polymerization, are shown in Tables III-A and III-B.

The solution containing the surfactant solution Dowfax® 2A1 has been added in the preemulsifier 80 minutes after the starting of the preemulsion feeding in the polymerization reactor.

The final removal of the monomers has been carried out by adding 35 g of the TBHP 13% solution and 85 g of the SFS 4% solution at the times respectively indicated in Example 1.

Table IV shows the properties of the obtained polymer dispersion: the dry content, the Brookfield viscosity, determined with type 2 spindle at 20 rpm, the microcoagulum (ppm) and the polymer Tg in °C.

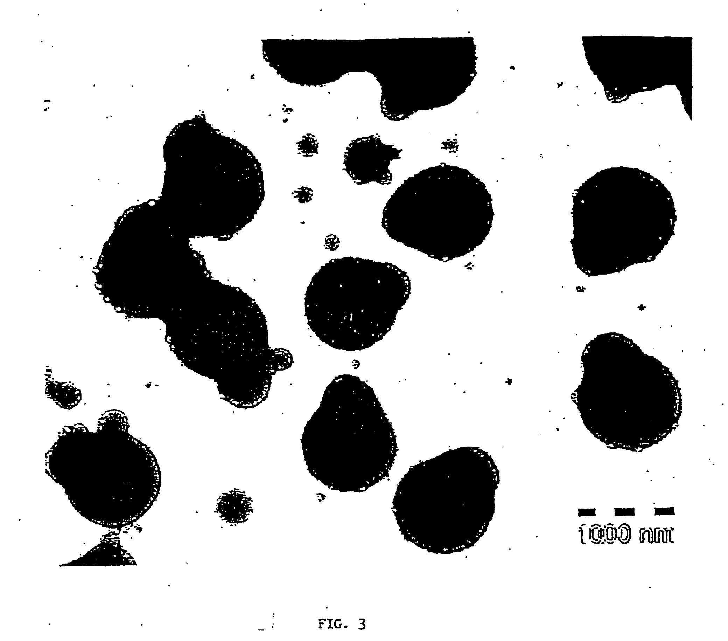

Figure 3 shows the sizes and the shape of the polymer particles determined by electronic transmission microscopy (enlargement 20,000X). It is observed the presence of a fraction higher than 30% by weight based on the total polymer, of non spherical particles (of the parachute type) whose apparent diameter is of about 1200 nm.

The amount of macrocoagula results lower than 0.2% by weight.

EXAMPLE 7

Polymerization process according to the invention wherein the second surfactant aliquot has been added in the preemulsifier 100 minutes after the feeding starting

Example 6 is repeated but adding the remaining surfactant aliquot after 100 minutes instead of 80 minutes.

Table IV shows the properties of the obtained polymer dispersion: the dry content, the Brookfield viscosity, determined with type 2 spindle at 100 rpm, the microcoagulum (ppm) and the polymer Tg in °C.

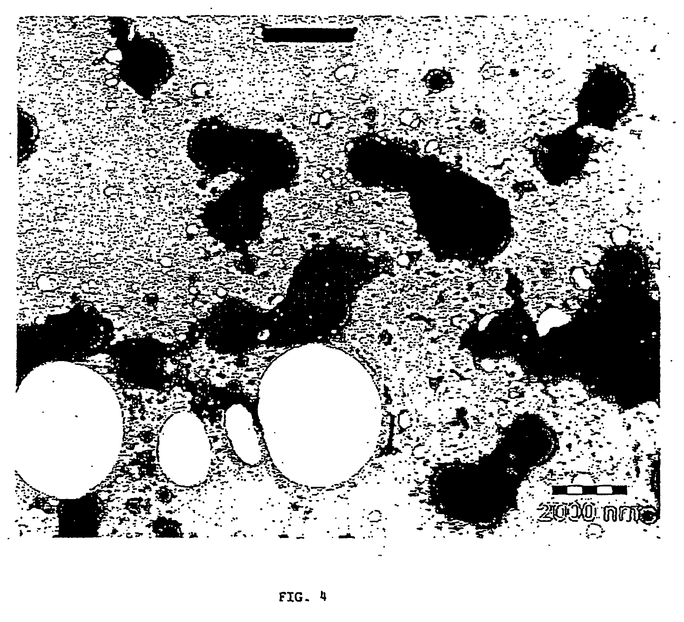

Figure 4 shows the sizes and the shape of the polymer particles determined by electronic transmission microscopy (enlargement 7,500X). It is observed the presence of a fraction higher than 30% by weight based on the total polymer, of non spherical particles (of the parachute type) whose apparent diameter is of about 1180 nm.

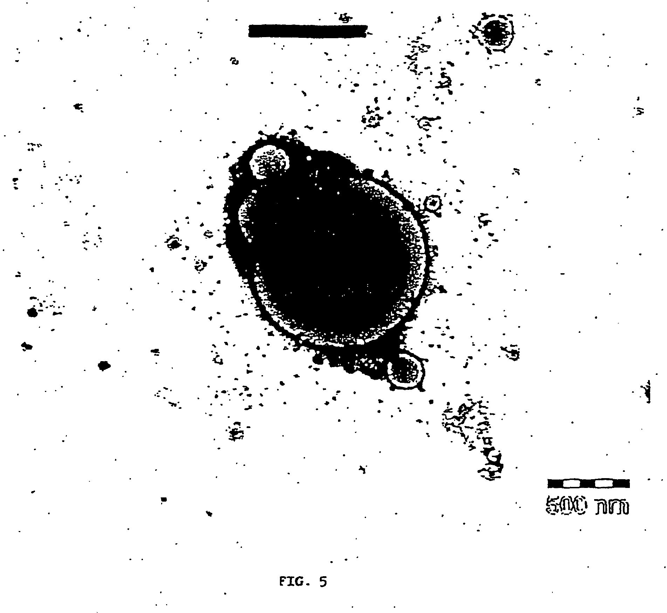

Figure 5,. which represents the 36,000X enlargement of a single particle, shows that the particles having a non spherical shape are not aggregates of spherical particles but are discrete moieties with a defined morphology.

The amount of macrocoagula results lower than 0.2% by weight.

EXAMPLE 8

Polymerization process according to the invention wherein the second surfactant aliquot has been added in the preemulsifier 60 minutes after the feeding starting

Example 6 is repeated but with the following differences:

- addition of the remaining surfactant aliquot after 60 minutes instead of 80 minutes;
- replacement of the methylmethacrylate with a same amount by weight of styrene;
- reduction of the AMA and HEMA amounts. See Table I.

The variations to the monomeric composition introduced in this Example do not significantly affect the time at which the polydispersity increase takes place.

Table IV shows the properties of the obtained polymer dispersion: the dry content, the Brookfield viscosity, determined with type 2 spindle at 20 rpm, the microcoagulum (ppm) and the polymer Tg in °C.

The amount of macrocoagula results lower than 0.2% by weight.

Table I

| compound | Ex. 2 comp | | Ex. 3 comp | | Ex. 4 comp | | Ex. 5 | | Ex. 6 | | Ex. 7 | | Ex. 8 | |
|---|---|---|---|---|---|---|---|---|---|---|---|---|---|---|
| | \multicolumn{16}{c}{Monomeric mixture composition in grams and as per cent by weight of each monomer} |
| | g | % | g | % | g | % | g | % | g | % | g | % | g | % |
| BA | 4320 | 84 | 4500 | 85.5 | 4500 | 85.5 | 4500 | 85.8 | 4500 | 83.4 | 4500 | 83.4 | 4500 | 85.8 |
| MMA | – | – | 600 | 11.4 | 600 | 11.4 | 600 | 11.4 | 600 | 11.1 | 600 | 11.1 | 600 | 11.4 |
| 2-EHA | – | – | – | – | – | – | – | – | – | – | – | – | – | – |
| AMA | 68 | 1.4 | 75 | 1.4 | 75 | 1.4 | 75 | 1.1 | 150 | 2.8 | 150 | 2.8 | 75 | 1.1 |
| AA | – | – | – | – | – | – | – | – | – | – | – | – | – | – |
| TEGDMA | 10 | 0.2 | 32 | 0.6 | 32 | 0.6 | 32 | 0.6 | 32 | 0.6 | 32 | 0.6 | 32 | 0.6 |
| HEMA | 50 | 1 | 55 | 1.1 | 55 | 1.1 | 55 | 1.1 | 110 | 2 | 110 | 2 | 55 | 1.1 |
| S | 540 | 10.8 | – | – | – | – | – | – | – | – | – | – | – | – |
| g total | 4988 | | 5262 | | 5262 | | 5262 | | 5392 | | 5392 | | 5262 | |

BA = butyl acrylate; MMA = methyl methacrylate; 2-EHA = 2-ethylhexylacrylate; AMA = methacrylic acid; AA = acrylic acid;
TEGDMA = triethyleneglycoldimethacrylate; HEMA = hydroxyethylmethacrylate; S = styrene.

EP 1 414 868 B1

Table II

| Amount in grams of the compounds, of demineralized water and of the solutions of compounds used to prepare the solution "basic charge" and the monomeric preemulsion | | | | | | | | |
|---|---|---|---|---|---|---|---|---|
| | Ex 2 comp | Ex 3 comp | Ex 4 comp | Ex 5 | Ex 6 | Ex 7 | Ex 8 | |
| Basic charge<br>- water<br>- Dowfax® 2A1<br>(sol. 45% by wt.)<br>- Sodium sulphate | 900<br>0.2<br><br>- | 950<br>0.2<br><br>10 | 950<br>0.2<br><br>10 | 950<br>0.2<br><br>- | 900<br>0.2<br><br>- | 900<br>0.2<br><br>- | 950<br>0.2<br><br>- | |
| Preemulsion<br>- Water<br>- Monomer mixture<br>(see Table I)<br>- Emulan®2080<br>(sol. 80% by wt.)<br>- Emulan®4070<br>(sol. 70% by wt.)<br>- Sodium sulphate<br>- Dowfax® 2A1<br>(sol. 45% by wt.) | 900<br>4988<br><br>44<br><br>17<br><br>-<br>- | 800<br>5262<br><br>50<br><br>20<br><br>-<br>- | 920<br>4988<br><br>50<br><br>20<br><br>-<br>90 | 800<br>5262<br><br>50<br><br>20<br><br>-<br>- | 800<br>5392<br><br>50<br><br>20<br><br>-<br>- | 800<br>5392<br><br>50<br><br>20<br><br>-<br>- | 800<br>5262<br><br>50<br><br>20<br><br>-<br>- | |
| Preemulsion<br>total grams | 5949 | 6132 | 6059 | 6262 | 6262 | 6262 | 6132 | |

EP 1 414 868 B1

Table III-A

| Start and polymerization phase of the monomer preemulsion: amount of preemulsion, water and other compounds and solutions of compounds used in the aforesaid phases and respective reaction times. The amounts in the Table are expressed in grams | | | | | | | | |
|---|---|---|---|---|---|---|---|---|
| | Ex 2 comp | Ex 3 comp | Ex 4 comp | Ex 5 | Ex 6 | Ex 7 | Ex 8 | |
| C.1 Start phase <br> -Basic charge (Tab. II) | 900.2 | 960.2 | 960.2 | 950.2 | 905.2 | 905.2 | 950.2 | |
| -Preemulsion (Tab. II) | 200 | 200 | 200 | 200 | 200 | 200 | 200 | |
| -PDSNa (sol. 10% by wt.) | 22 | 22 | 22 | 22 | 22 | 22 | 22 | |
| C.2 Polymerization Sol.* added in the preemulsifier: <br> -Water <br> -Dowfax®2A1 (sol. 45% by wt.) | 80 <br> 75 | 120 <br> 90 | − <br> − | − <br> − | 120 <br> 90 | 120 <br> 90 | 120 <br> 90 | |
| Polymeriz. time (min.) at the time of the addition in the preemulsifier of the surfactant solution* | 0 | 0 | − | − | 80 | 100 | 60 | |

EP 1 414 868 B1

## Table III-B

| Polymerization phase of the monomer preemulsion: amount of the preemulsion, water and other compounds and solutions of compounds used and respective reaction times. The amounts in the Table are expressed in grams; the times of the various phases are expressed in minutes. In the Table the 1st and 2nd polymeriz. phase form the phase C2. | | | | | | | |
|---|---|---|---|---|---|---|---|
| | Ex 2 comp | Ex 3 comp | Ex 4 comp | Ex 5 | Ex 6 | Ex 7 | Ex 8 |
| 1st polymeriz.phase duration(minutes): feeding: | 30 | 30 | 30 | 30 | 30 | 30 | 30 |
| -Preemulsion | 300 | 300 | 300 | 300 | 300 | 300 | 300 |
| -PDSNa (sol. 5% by wt.) | 37 | 37 | 37 | 37 | 37 | 37 | 37 |
| 2nd polymeriz.phase duration(minutes): feeding: | 270 | 270 | 270 | 270 | 270 | 270 | 270 |
| -Preemulsion | 5604 | 5842 | 5832 | 5632 | 5972 | 5972 | 5842 |
| -PDSNa (sol. 5% by wt) | 334 | 358 | 358 | 356 | 356 | 356 | 356 |
| -Water (washing preemulsifier) | 100 | 90 | 90 | 90 | 90 | 90 | 90 |
| Monomers removal Sol. PDSNa 5% | 49 | 47 | 47 | 47 | 47 | 47 | 47 |

Table IV

| Characterization of the obtained polymer dispersion: dry content determined as per cent by weight, Brookfield viscosity at 23°C of the dispersion as such, determined in mPa.s, polymer Tg in °C, microcoagulum content in ppm and particle average diameter distribution | | | | | | | |
|---|---|---|---|---|---|---|---|
| | Ex 2 comp | Ex 3 comp | Ex 4 comp | Ex 5 contr. | Ex 6 | Ex 7 | Ex 8 |
| Dry content (% by weight) | 66.1 | n.d. | 64.4 | 60.4* | 68.2 | 68.2 | 67.2 |
| Absolute Viscosity (mPa.s) | 21000 | n.d | 9900 | 850 | 650 | 345 | 440 |
| Polymer Tg (°C) | -27.8 | n.d. | -29.4 | -28.3 | -28.0 | -28.0 | -27.8 |
| Microcoagulum (ppm) | 700 | n.d. | 85 | 73 | 64 | 145 | 68 |

* The solid content is lower due to the compound loss by partial coagulation

EP 1 414 868 B1

**EP 1 414 868 B1**

**Claims**

1. A process to obtain an aqueous polymer dispersion having a dry content from 65% to 75% by weight and the combination of the following properties:

   - Brookfield viscosity lower than 3,000 mPa.s, measured at 23°C under the following conditions :

     up to 400 mPa.s with type 2 spindle at 100 rpm, from 400 to 700 mPa.s with type 2 spindle at 20 rpm, from 700 to 3,000 mPa.s with type 3 spindle at 20 rpm;

   - dry microcoagula content lower than 500 ppm, preferably lower than 200 ppm;
   - wet macrocoagula content, with respect to the weight of the final dispersion, lower than 0.2% by weight,

   wherein the diameter of the polymer particles has a multimodal distribution, said process carried out by radical polymerization in aqueous emulsion of unsaturated, preferably hydrogenated, monomers according to the following steps:

   - formation of a monomer preemulsion in water by using surfactants;
   - transfer into the polymerization reactor under stirring, in sequence, of the following aqueous phases:

     - basic charge formed by:

       a surfactant solution, in an amount by weight with respect to the weight of the final polymer dispersion, i.e. the dispersion added with all the components, from 1 to 15%;

     - a part of the preemulsion. prepared in the previous phase, in an amount from 1% to 10% by weight with respect to the initial preemulsion;

   - step C.1
     polymerization start, by adding radical initiators activable by thermal, chemical way or by UV irradiation;
   - step C.2
     monomeric mixture polymerization, gradually adding in the reactor, separately, the initiator solution and the remaining part of the preemulsion; the polymerization temperature generally being from about 30°C to about 90°C;
   - step C.3
     removal of the remaining monomers;

   wherein:

   A) from the polymerization process start and up to a time in the range from -40% to +20% with respect to the instant, expressed in minutes, wherein the polydispersity index of the particle sizes of the polymer dispersion increases as below defined, the preemulsion is fed containing an amount of surfactant such as to have a surfactant concentration in the reactor in this phase not higher than 0.7% by weight, the surfactant concentration preferably being from 0.3 to 0.6% by weight;

   B) subsequently to the time defined in A), and till the polymerisation end, the remaining part of preemulsion 'is fed, preferably with a constant feeding rate, containing a surfactant amount such as to obtain at the polymerization end a polymer dispersion wherein the surfactant concentration is higher than that of the surfactant in step A) and lower than 5% by weight with respect to the total weight of the polymer dispersion, preferably from 0.7 to 3.5% by weight, more preferably from 1 to 2.5% by weight, the range extremities calculated with respect to the total weight of the polymer dispersion;

   the particle sizes being measured by light scattering by the Coulter® Counter N4MD plus instrument, and the instant at which the polydispersity index of the particle sizes increases, being the time at which the index increases up to a value at least of 0.05, preferably up to a value of 0.1, with respect to that, taken as about equal to zero, measured within 10 minutes start from the polymerization trigger.

2. A process according to claim 1, wherein the surfactant solution used in the basic charge is formed by water containing a surfactant in an amount from 0.05 to 0.3% by weight.

17

3. A process according to claims 1-2, wherein the preemulsion in step C.2 is fed into the reactor with constant flow both in A) and in B) .

4. A process according to claims 1-2, wherein the preemulsion in step C.2 is fed into the reactor by initially using a preemulsion feeding rate, determined as % by weight based on the total of the prepared preemulsion, initially using a preemulsion feeding rate from 0.08%/min to 0.25%/min for the first 20-40 minutes and then a feeding rate of 0.25%/min, preferably 0.32%/min-0.80%/min, until the polymerization end.

5. A process according to claims 1-4, wherein the ethylenically unsaturated monomers used are esters of $C_3$-$C_{10}$ -$\alpha$, $\beta$-unsaturated, mono- or di-carboxylic aliphatic acids with $C_1$-$C_{12}$, preferably $C_1$-$C_8$, aliphatic or $C_5$-$C_8$ cycloaliphatic alkanols, in admixture with $C_3$-$C_{10}$ -$\alpha,\beta$-unsaturated, mono- or di-carboxylic aliphatic acids, optionally in the presence of other ethylene monomers.

6. A process according to claim 5, wherein at least 70% by weight of the monomeric emulsion is formed by the esters optionally in the presence of $C_3$-$C_{10}$ -$\alpha,\beta$-unsaturated, mono- or di-carboxylic aliphatic acids.

7. A process according to claims 5-6, wherein the ratio by weight between the acid and the ester ranges from about 1:10 to about 1:350.

8. A process according to claims 5-7, wherein the other ethylene monomers are selected from one or more of the following: vinylaromatic monomers, $C_1$-$C_{12}$ alkyl vinylethers; vinyl esters of $C_1$-$C_{18}$ aliphatic monocarboxylic acids; amides of $C_3$-$C_{10}$ mono- and di-carboxylic $\alpha,\beta$-unsaturated aliphatic acids; hydroxy esters of the above $C_3$-$C_{10}$ mono- and di-carboxylic $\alpha,\beta$-unsaturated acids with $C_2$-$C_{12}$ alkanediols; nitriles of $C_3$-$C_{10}$ mono- and di-carboxylic $\alpha,\beta$-unsaturated acids.

9. A process according to claims 5-8, wherein to the monomer mixture crosslinking monomers are added in an amount not higher than 3%, preferably from 0.1% to 1% by weight with respect to the monomeric formulation.

10. A process according to claims 5-9, wherein the monomer mixture has the following composition:

   - from 70 to 99.7% by weight of at least one ester of the (meth)acrylic acid with $C_1$-$C_{12}$ alkanols;
   - from 0.3 to 5% by weight of (meth)acrylic acid;
   - from 0 to 5% by weight of hydroxyesters of the (meth)acrylic acid with $C_1$-$C_{12}$ alkanols;
   - from 0 to 2% of a monomer having crosslinking properties;
   - from 0 to 15% by weight of styrene;
   - from 0 to 15% by weight of vinyl acetate.

11. A process according to claims 1-10, wherein the surfactants are non-ionic, and/or anionic or cationic or mixtures thereof; preferably mixtures of anionic and non-ionic surfactants, and optionally protector colloids are used.

12. A process according to claim 11, wherein the total amount of surfactants and optional protector colloids is lower than 5% as percentage by weight with respect to the final polymer dispersion, preferably from 0.7 to 3.5% by weight, more preferably from 1 to 2.5% by weight.

13. A process according to claims 1-12, wherein a control agent of the polymer chain length and of its molecular weight as chain transfer agent is optionally used in an amount from 0.01 to 5% by weight with respect to the monomeric mixture.

14. A process according to anyone. of claims 1 to 13, wherein the aqueous polymer dispersion to be obtained has a Brookfield viscosity lower than 2,000 mPa.s, measured at 23°C under the following conditions : up to 400 mPa.s with type 2 spindle at 100 rpm, from 400 to 700 mPa.s with type 2 spindle at 20 rpm, from 700 to 3,000 mPa.s with type 3 spindle at 20 rpm.

15. A process according to anyone of claims 1 to 14, wherein the aqueous polymer dispersion to be obtained has a Brookfield viscosity lower than 1,000 mPa.s when the dry content is about 68% by weight, measured at 23°C under the following conditions : up to 400 mPa.s with type 2 spindle at 100 rpm, from 400 to 700 mPa.s with type 2 spindle at 20 rpm, from 700 to 3,000 mPa.s with type 3 spindle at 20 rpm.

16. Aqueous dispersions obtainable by the process according to claims 1-15.

17. Dispersions according to claim 16 containing multimodal distributions of the dispersed polymer particle sizes containing a fraction of particles of a non spherical shape having an average diameter determined by electronic transmission microscopy, comprised between 800 and 1,300 nm.

18. Dispersions according to claims 16-17, containing polymers having a Tg comprised between about -60°C and about +40°C.

**Patentansprüche**

1. Verfahren zur Herstellung einer wäßrigen Polymerdispersion mit einem Trockengehalt von 65 bis 75 Gew.-% und mit der Kombination der folgenden Eigenschaften:

- Brookfield-Viskosität unter 3000 mPa . s, gemessen bei 23°C unter den folgenden Bedingungen: bis zu 400 mPa · s mit einer Spindel vom Typ 2 bei 100 U/min, von 400 bis 700 mPa · s mit einer Spindel vom Typ 2 bei 20 U/min, von 700 bis 3000 mPa · s mit einer Spindel vom Typ 3 bei 20 U/min;

- Trockengehalt an Mikrokoagulaten unter 500 ppm, vorzugsweise unter 200 ppm;

- Feuchtgehalt an Makrokoagulaten, bezogen auf das Gewicht der fertigen Dispersion, unter 0,2 Gew.-%,

wobei der Durchmesser der Polymerteilchen eine multimodale Verteilung hat, das Verfahren durch Radikalpolymerisation in einer wäßrigen Emulsion von ungesättigten, vorzugsweise hydrierten Monomeren nach folgenden Schritten durchgeführt wird:

- Bildung einer Monomer-Voremulsion in Wasser mit Hilfe von Tensiden;
- Überführung der folgenden wäßrigen Phasen nacheinander in den Polymerisationsreaktor unter Rühren:

  - Basis-Beschickungsmaterial, hergestellt durch:

    eine Tensid-Lösung in einer gewichtsbezogenen Menge, in Bezug auf das Gewicht der fertigen Polymerdispersion, d.h. der Dispersion, der sämtliche Komponenten von 1 bis 15% zugefügt wurden;

  - ein Teil der in der vorherigen Phase hergestellten Voremulsion in einer Menge von 1 bis 10 Gew.-%, bezogen auf die Anfangs-Voremulsion;

  - Schritt C.1
    Polymerisationsstart, durch Zugabe von Radikalstartern, die sich auf thermische, chemische Weise oder durch UV-Bestrahlung aktivieren lassen;

  - Schritt C.2
    Polymerisation eines Monomerengemischs, wobei die Starterlösung und der verbleibende Teil der Voremulsion gesondert allmählich in den Reaktor gegeben werden; wobei die Polymerisationstemperatur gewöhnlich von etwa 30°C bis etwa 90°C reicht;

  - Schritt C.3
    Entfernung der verbleibenden Monomere;

  wobei:

  A) vom Beginn des Polymerisationsverfahrens bis hin zu einem Bereich von -40% bis +20% in Bezug den Zeitpunkt, ausgedrückt in Minuten, bei dem der Polydispersitätsindex der Teilchengrößen der Polymerdispersion wie nachstehend definiert steigt, die Voremulsion zugeführt wird, welche eine so große Menge an Tensid enthält, dass eine Tensidkonzentration im Reaktor in dieser Phase von nicht mehr als 0,7 Gew.-% erhalten wird, wobei die Tensidkonzentration vorzugsweise von 0,3 bis 0,6 Gew.-% reicht;

B) nach der in A) definierten Zeit und bis zum Polymerisationsende der restliche Teil der Voremulsion zugeführt wird, vorzugsweise mit einer konstanten Beschickungsrate, die eine so große Menge an Tensid enthält, dass bei Polymerisationsende eine Polymerdispersion erhalten wird, bei der die Tensidkonzentration höher als die des Tensids in Schritt A) und niedriger als 5 Gew.-%, bezogen auf das Gesamtgewicht der Polymerdispersion, vorzugsweise von 0,7 bis 3,5 Gew.-%, stärker bevorzugt von 1 bis 2,5 Gew.-%, ist, wobei die Bereichsextrema in Bezug auf das Gesamtgewicht der Polymerdispersion berechnet werden;

wobei die Teilchengrößen durch Lichtstreuung mit dem Coulter®-Zählgerät N4MD-plus gemessen werden, und der Zeitpunkt, bei dem der Polydispersitätsindex der Teilchengrößen steigt, derjenige Zeitpunkt ist, bei dem der Index bis zu einem Wert von mindestens 0,05, vorzugsweise bis zu einem Wert von 0,1, in Bezug auf denjenigen Wert, der als ungefähr gleich Null angenommen wird und der innerhalb von 10 Minuten vom Start des Polymerisationstriggers gemessen wird, steigt.

2. Verfahren nach Anspruch 1, wobei die im Basisbeschickungsmaterial verwendete Tensidlösung durch Wasser gebildet wird, das ein Tensid in einer Menge von 0,05 bis 0,3 Gew.-% enthält.

3. Verfahren nach den Ansprüchen 1 bis 2, wobei die Voremulsion in Schritt C.2 mit einem konstanten Fluss sowohl in A) als auch B) in den Reaktor geleitet wird.

4. Verfahren nach den Ansprüchen 1 bis 2, wobei die Voremulsion in Schritt C.2 in den Reaktor geleitet wird, indem zu Beginn eine Voremulsionsbeschickungsrate verwendet wird, die als Gewichtsprozent auf der Basis der insgesamt hergestellten Voremulsion bestimmt wird, wobei zu Beginn eine Voremulsionsbeschickungsrate von 0,08%/ min bis 0,25%/min für die ersten 20 bis 40 Minuten und damn eine Beschickungsrate von 0,25%/min, vorzugsweise 0,32%/min bis 0,80%/min bis hin zum Polymerisationsende verwendet wird.

5. Verfahren nach den Ansprüchen 1 bis 4, wobei die verwendeten ethylenisch ungesättigten Monomere Ester von ($\alpha$,$\beta$-ungesättigten aliphatischen $C_3$-$C_{10}$-Mono- oder Dicarbonsäuren mit $C_1$-$C_{12}$-, vorzugsweise $C_1$-$C_8$-aliphatischen oder $C_3$-$C_8$-cycloaliphatischen Alkanolen im Gemisch mit $\alpha$,$\beta$-ungesättigten aliphatischen $C_3$-$C_{10}$-Mono- oder Dicarbonsäuren, gegebenenfalls in Gegenwart von anderen Ethylenmonomeren, sind.

6. Verfahren nach Anspruch 5, wobei mindestens 70 Gew.-% der Monomeremulsion von Estern gebildet wird, gegebenenfalls in Gegenwart von $\alpha$,$\beta$-ungesättigten aliphatischen $C_3$-$C_{10}$-Mono- oder Dicarbonsäuren.

7. Verfahren nach dem Ansprüchen 5 bis 6, wobei das Gewichtsverhältnis zwischen Säure und Ester von etwa 1:10 bis etwa 1:350 reicht.

8. Verfahren nach dem Ansprüchen 5 bis 7, wobei die anderen Ethylenmonomere ausgewählt sind aus einer oder mehreren der folgenden Bestandteile: vinylaromatischen Monomeren, $C_1$-$C_{12}$-Alkylvinylethern; Vinylestern von $C_1$-$C_{18}$aliphatischen Monocarbonsäuren; Amiden von $\alpha$,$\beta$-ungesättigten aliphatischen $C_3$-$C_{10}$-Mono- und Dicarbonsäuren; Hydroxyestern der vorstehend genannten $\alpha$,$\beta$-ungesättigten $C_3$-$C_{10}$-Mono- und Dicarbonsäuren mit $C_2$-$C_{12}$-Alkandiolen; Nitrilen von $\alpha$,$\beta$-ungesättigten $C_3$-$C_{10}$-Mono- und Dicarbonsäuren.

9. Verfahren nach den Ansprüchen 5 bis 8, wobei zu dem Monomergemisch Vernetzungsmonomere in einer Menge von nicht mehr als 3%, vorzugsweise von 0,1 bis 1 Gew.-%, bezogen auf die Monomerformulierung, zugefügt werden.

10. Verfahren nach den Ansprüchen 5 bis 9, wobei das Monomergemisch die folgende Zusammensetzung hat:

- 70 bis 99,7 Gew.-% von mindestens einem Ester von (Meth)acrylsäure mit $C_1$-$C_{12}$-Alkanolen;
- 0,3 bis 5 Gew.-% (Meth)acrylsäure;
- 0 bis 5 Gew.-% Hydroxyester von (Meth)acrylsäure mit $C_1$-$C_{12}$-Alkanalen;
- 0 bis 2% eines Monomers mit Vernetzungseigenschaften;
- 0 bis 15 Gew.-% Styrol;
- 0 bis 15 Gew.-% Vinylacetat.

11. Verfahren nach den Ansprüchen 1 bis 10, wobei die Tenside nicht-ionisch, und/oder anionisch oder kationisch oder Gemische davon sind; vorzugsweise werden Gemische von anionischen und nichtionischen Tensiden, und gegebenenfalls Schutzkolloide verwendet.

**12.** Verfahren nach Anspruch 11, wobei die Gesamtmenge der Tenside und gegebenenfalls vorhandenen Schutzkolloide niedriger als 5 Gew.-%, ausgedrückt als Gewichtsprozentsatz in Bezug auf die fertige Polymerdispersion, vorzugsweise 0,7 bis 3,6 Gew.-%, stärker bevorzugt 1 bis 2,5 Gew.-% ist.

**13.** Verfahren nach den Ansprüchen 1 bis 12, wobei ein Kontrollmittel für die Kettenlänge und das Molekulargewicht des Polymers als Kettenübertragungsmittel gegebenenfalls in einer Menge von 0,01 bis 5 Gew.-%, bezogen auf das Monomerengemisch, verwendet wird.

**14.** Verfahren nach einem der Ansprüche 1 bis 13, wobei die wäßrige Polymerdispersion, die erhalten werden soll, eine Brookfield-Viskosität unter 2000 mPa· s hat, gemessen bei 23°C unter den folgenden Bedingungen: bis zu 400 mPa - s mit einer Spindel vom Typ 2 bei 100 U/min, von 400 bis 700 mPa · s mit einer Spindel vom Typ 2 bei 20 U/min, von 700 bis 3000 mPa · s mit einer Spindel vom Typ 3 bei 20 U/min.

**15.** Verfahren nach einem der Ansprüche 1 bis 14, wobei die wäßrige Polymerdispersion, die erhalten werden soll, eine Brookfield-Viskosität unter 1000 mPa· s hat, wenn der Trockengehalt etwa 68 Gew.-% beträgt, gemessen bei 23°C unter den folgenden Bedingungen: bis zu 400 mPa . s mit einer Spindel vom Typ 2 bei 100 U/min, von 400 bis 700 mPa · s mit einer Spindel vom Typ 2 bei 20 U/min, von 700 bis 3000 mPa · s mit einer Spindel vom Typ 3 bei 20 U/min.

**16.** Wäßrige Dispersionen, erhältlich durch das Verfahren nach den Ansprüchen 1 bis 15.

**17.** Dispersionen nach Anspruch 16, mit multimodalen Verteilungen der dispergierten Polymerteilchengrößen, die eine Teilchenfraktion einer nichtkugelförmigen Gestalt mit einem durch Elektronentransmissionsmikroskopie bestimmten durchschnittlichen Durchmesser zwischen 800 und 1300 nm enthalten.

**18.** Dispersionen nach den Ansprüchen 16 bis 17, welche Polymere mit einer Tg zwischen etwa -60°C und etwa +40°C enthalten.

**Revendications**

**1.** Procédé pour obtenir une dispersion aqueuse de polymère ayant un extrait sec de 65 % à 75 % en poids et la combinaison des propriétés suivantes :

- une viscosité Brookfield inférieure à 3 000 mPa.s, mesurée à 23°C dans les conditions suivantes : jusqu'à 400 mPa.s avec un axe de type 2 à 100 tr/min, de 400 à 700 mPa.s avec un axe de type 2 à 20 tr/min, de 700 à 3 000 mPa.s avec un axe de type 3 à 20 tr/min ;
- une teneur en microcoagula sec inférieure à 500 ppm, de préférence inférieure à 200 ppm ;
- une teneur en macrocoagula humide, par rapport au poids de la dispersion finale, inférieure à 0,2 % en poids,

dans lequel, le diamètre des particules de polymère a une distribution multimodale, ledit procédé est réalisé par polymérisation radicale en émulsion aqueuse de monomères insaturés, de préférence hydrogénés selon les étapes suivantes :

- la formation d'une pré-émulsion de monomères dans l'eau en utilisant des agents tensio-actifs ;
- le transfert dans le réacteur de polymérisation sous agitation, dans l'ordre, des phases aqueuses suivantes :

- la charge de base constituée par :

    une solution d'agents tensio-actifs, dans une quantité de 1 à 15 % en poids par rapport au poids de la dispersion finale de polymère, à savoir la dispersion avec tous les composants ajoutés ;

- une partie de la pré-émulsion préparée dans la phase précédente, dans une quantité de 1 % à 10 % en poids par rapport à la pré-émulsion initiale ;
- l'étape C.1
  le début de la polymérisation, en ajoutant les initiateurs de radicaux activables de manière thermique, chimique ou par irradiation par UV ;
- l'étape C.2

la polymérisation du mélange de monomères, en ajoutant graduellement dans le réacteur, séparément, la solution d'initiateur et la partie restante de la pré-émulsion ; la température de polymérisation étant généralement située entre environ 30°C et environ 90°C ;

- l'étape C.3
  le retrait des monomères restants ;

dans lequel :

A) depuis le début du procédé de polymérisation et jusqu'au moment, dans la gamme de -40 % à +20 % par rapport à l'instant, exprimé en minutes, auquel l'indice de polydispersité des tailles de particules de la dispersion de polymère augmente de la manière définie ci-dessous, la pré-émulsion est alimentée en contenant une quantité d'agent tensio-actif de sorte à avoir une concentration en agent tensio-actif dans le réacteur dans cette phase inférieure ou égale à 0,7 % en poids, la concentration en agent tensio-actif étant de préférence de 0,3 à 0,6 % en poids ;

B) ultérieurement au moment défini en A), et jusqu'à la fin de la polymérisation, la partie restante de pré-émulsion est alimentée, de préférence avec un débit d'alimentation constant, en contenant une quantité d'agent tensio-actif de sorte à obtenir à la fin de la polymérisation une dispersion de polymère dans laquelle la concentration en agent tensio-actif est plus élevée que celle de l'agent tensio-actif dans l'étape A) et inférieure à 5 % en poids par rapport au poids total de la dispersion de polymère, de préférence de 0,7 à 3,5 % en poids, plus préférablement de 1 à 2,5 % en poids, les extrémités de la plage étant calculées par rapport au poids total de la dispersion de polymère ;

les tailles de particules étant mesurées par la diffusion de la lumière à l'aide de l'instrument de mesure Coulter® Counter N4MD plus, et l'instant au moment duquel l'indice de polydispersité des tailles de particules augmente étant l'instant au moment duquel l'indice augmente jusqu'à une valeur d'au moins 0,05, de préférence jusqu'à une valeur de 0,1, par rapport à celle prise comme étant une valeur environ égale à zéro, mesurée dans un délai de 10 minutes après le début du déclenchement de la polymérisation.

2. Procédé selon la revendication 1, dans lequel la solution d'agents tensio-actifs utilisée dans la charge de base est formée à partir d'eau contenant un agent tensio-actif, dans une quantité de 0,05 à 0,3 % en poids.

3. Procédé selon les revendications 1 à 2, dans lequel la pré-émulsion dans l'étape C.2 est introduite dans le réacteur avec un débit constant en A) et en B).

4. Procédé selon les revendications 1 à 2, dans lequel la pré-émulsion dans l'étape C.2 est introduite dans le réacteur en utilisant initialement un débit d'alimentation de la pré-émulsion, déterminé sous forme de pourcentage en poids basé sur le total de la pré-émulsion préparée, en utilisant initialement un débit d'alimentation de la pré-émulsion de 0,08 %/min à 0,25 %/min pour les 20 à 40 premières minutes et ensuite un débit d'alimentation de 0,25 %/min, de préférence de 0,32 %/min à 0,80 %/min, jusqu'à la fin de la polymérisation.

5. Procédé selon les revendications 1 à 4, dans lequel les monomères éthyléniquement insaturés utilisés sont des esters d'acides mono- ou di-carboxyliques aliphatiques -$\alpha,\beta$-insaturés en $C_3$-$C_{10}$ avec des alcanols en $C_1$-$C_{12}$, de préférence aliphatiques en $C_1$-$C_8$ ou cycloaliphatiques en $C_5$-$C_8$, associés dans un mélange avec des acides mono- ou di-carboxyliques aliphatiques -$\alpha,\beta$-insaturés en $C_3$-$C_{10}$, éventuellement en présence d'autres monomères d'éthylène.

6. Procédé selon la revendication 5, dans lequel au moins 70 % en poids de l'émulsion de monomères est formée par les esters éventuellement en présence d'acides mono- ou di-carboxyliques aliphatiques - $\alpha,\beta$-insaturés en $C_3$-$C_{10}$.

7. Procédé selon les revendications 5 à 6, dans lequel le rapport en poids entre l'acide et l'ester est dans une plage comprise entre environ 1/10 et environ 1/350.

8. Procédé selon les revendications 5 à 7, dans lequel les autres monomères d'éthylène sont choisis parmi un ou plusieurs des composés suivants : des monomères vinylaromatiques ; des éthers de vinyle et d'alkyle en $C_1$-$C_{12}$ ; des esters de vinyle d'acides monocarboxyliques aliphatiques en $C_1$-$C_{18}$ ; des amides d'acides mono- et di-carboxyliques aliphatiques -$\alpha,\beta$-insaturés en $C_3$-$C_{10}$ ; des hydroxyesters des acides mono- et di-carboxyliques aliphatiques -$\alpha,\beta$-insaturés en $C_3$-$C_{10}$ susmentionnés avec des alcanediols en $C_2$-$C_{12}$ ; des nitriles d'acides mono-

et di-carboxyliques -$\alpha,\beta$-insaturés en $C_3$-$C_{10}$.

9. Procédé selon les revendications 5 à 8, dans lequel des monomères de réticulation sont ajoutés dans le mélange de monomères dans une quantité inférieure ou égale à 3 %, de préférence de 0,1 % à 1 % en poids par rapport à la formulation de monomères.

10. Procédé selon les revendications 5 à 9, dans lequel le mélange de monomères a la composition suivante :

   - de 70 à 99,7 % en poids d'au moins un ester de l'acide (méth)acrylique avec des alcanols en C1-$C_{12}$ ;
   - de 0,3 à 5 % en poids de l'acide (méth)acrylique ;
   - de 0 à 5 % en poids des hydroxyesters de l'acide (méth)acrylique avec des alcanols en $C_1$-$C_{12}$ ;
   - de 0 à 2 % d'un monomère ayant des propriétés de réticulation ;
   - de 0 à 15 % en poids de styrène ;
   - de 0 à 15 % en poids d'acétate de vinyle.

11. Procédé selon les revendications 1 à 10, dans lequel les agents tensio-actifs sont non ioniques, et/ou anioniques ou cationiques ou des mélanges de ceux-ci ; de préférence des mélanges des agents tensio-actifs anioniques et non ioniques, et éventuellement des colloïdes protecteurs sont utilisés.

12. Procédé selon la revendication 11, dans lequel la quantité totale d'agents tensio-actifs et d'éventuels colloïdes protecteurs est inférieure à 5 % en pourcentage en poids par rapport à la dispersion finale de polymère, de préférence de 0,7 à 3,5 % en poids, plus préférablement de 1 à 2,5 % en poids.

13. Procédé selon les revendications 1 à 12, dans lequel un agent de contrôle de la longueur de la chaîne de polymère et de son poids moléculaire en tant qu'agent de transfert de chaînes est éventuellement utilisé dans une quantité de 0,01 à 5 % en poids par rapport au mélange de monomères.

14. Procédé selon l'une quelconque des revendications 1 à 13, dans lequel la dispersion aqueuse de polymère qui doit être obtenue a une viscosité Brookfield inférieure à 2 000 mPa.s, mesurée à 23°C dans les conditions suivantes : jusqu'à 400 mPa.s avec un axe de type 2 à 100 tr/min, de 400 à 700 mPa.s avec un axe de type 2 à 20 tr/min, de 700 à 3 000 mPa.s avec un axe de type 3 à 20 tr/min.

15. Procédé selon l'une quelconque des revendications 1 à 14, dans lequel la dispersion aqueuse de polymère qui doit être obtenue a une viscosité Brookfield inférieure à 1 000 mPa.s lorsque l'extrait sec est d'environ 68 % en poids, mesurée à 23°C dans les conditions suivantes : jusqu'à 400 mPa.s avec un axe de type 2 à 100 tr/min, de 400 à 700 mPa.s avec un axe de type 2 à 20 tr/min, de 700 à 3 000 mPa.s avec un axe de type 3 à 20 tr/min.

16. Dispersions aqueuses résultant du procédé selon les revendications 1 à 15.

17. Dispersions selon la revendication 16 contenant des distributions multimodales des tailles de particules de polymère dispersées contenant une fraction de particules d'une forme non sphérique ayant un diamètre moyen déterminé par microscopie de transmission électronique, compris entre 800 et 1 300 nm.

18. Dispersions selon les revendications 16 à 17, contenant des polymères ayant une Tg comprise entre environ -60°C et environ +40°C.

FIG. 1

Polydispersity Index measured in Example 5

FIG. 2

FIG. 3

FIG. 4

FIG. 5